# EUROPEAN PATENT APPLICATION

(11) **EP 2 538 383 A1**
(43) Date of publication of application: **26.12.2012**
(21) Application number: 12004674.3
(22) Date of filing: 21.06.2012
(51) Int. Cl.: G06Q 20/34, G06Q 20/42, G06Q 20/32

(54) **Mobile device for transaction payment delegation**

(30) Priority: 22.06.2011 US 201113166563
(71) Applicant: Broadcom Corporation, Irvine, CA 92617 (US)
(72) Inventor: Nahidipour, Aram, 92677 Laguna Niguel, CA (US)
(74) Representative: Jehle, Volker Armin

(57) **Abstract**

Methods and systems are disclosed herein to provide payment delegation for transactions. A payment request may be transmitted to a point of sale system from a mobile device. The mobile device owner may request that payment details for the transaction be obtained from a third-party device, such as a parent's computer. The point of sale system may transmit an approval request to the third-party device, or the mobile device may transmit an approval request to the third-party device. Upon receipt of payment details, the payment details may be communicated, and the transaction may be completed.

## Description

### BACKGROUND

### Field

Embodiments relate to systems for payment.

### Background

Near field communication (NFC) devices are being integrated into mobile devices, such as smartphones, to facilitate the use of these mobile devices in conducting daily transactions. For example, instead of carrying numerous credit cards, credit information provided by the credit cards can be stored on a NFC device. Various systems exist for payment for transactions using mobile devices or NFC. Typically, these systems include a payment target and a payment initiator. The NFC device in a payment initiator may simply be tapped to a payment target to relay credit information to complete a transaction.

Generally, NFC requires that NFC devices be present within a relatively small distance from one another so that their corresponding magnetic fields can exchange information. Typically, a first NFC device transmits or generates a magnetic field modulated with the information, such as the credit information. This magnetic field inductively couples onto a second NFC device that is proximate to the first NFC device. The second NFC device may respond to the first NFC device by transmitting or generating its own magnetic field and inductively coupling this magnetic field to the first NFC device.

### BRIEF SUMMARY

Disclosed herein are systems and methods for delegation of payment for transactions. In an embodiment, a mobile device is disclosed. The mobile device includes a communications module. The mobile device also includes a processor and a transceiver. The transceiver is configured to transmit an approval request for the purchase of an item or completion of a transaction to a third-party device. The transceiver is further configured to receive an approval decision from the third-party device, based on the approval request.

In an embodiment, a further mobile device is disclosed. The mobile device includes a memory which stores data related to one or more pre-approved transactions. The mobile device also includes a communications module configured to communicate an attempted payment for a transaction to a point of sale system. The mobile device further includes a processor configured to determine if the transaction is a pre-approved transaction. Based on the determination, the communications module may communicate a payment for the transaction to the point of sale system.
According to an aspect, a mobile device comprises:
a communications module;
a processor; and
a transceiver, wherein the transceiver is configured to:
   transmit an approval request for a purchase of an item to a third-party device;
   receive an approval decision from the third-party device, based on the approval request;
   wherein the communications module is configured to communicate a payment to a point of sale system, based on the approval decision.
Advantageously, the communications module is a near field communications module.
Advantageously, the communications module is a Bluetooth communications module.
Advantageously, the communications module is a 60 GHz communications module.
Advantageously, the communications module is a wireless communications module.
Advantageously, the device further comprises:
a memory, wherein the memory stores an identifier for one or more third-party devices.
Advantageously, the approval request comprises at least one of a name, a phone number, a security code, a location, a picture of a user of the mobile device, or a picture of the item.
Advantageously, the approval decision comprises at least one of an approved transaction amount, a credit card number, credit card type, a credit card expiration date, an authorization code, a debit card number, or a bank account number.
According to an aspect, a mobile device comprises:
a memory, the memory storing one or more pre-approved transactions;
a communications module configured to communicate an attempted payment for a transaction to a point of sale system;
a processor configured to determine whether the transaction is a pre-approved transaction;
wherein the communications module is further configured to communicate a payment for the transaction to the point of sale system, based on the determination.
Advantageously, the communications module is a near field communications module.
Advantageously, the communications module is a Bluetooth communications module.
Advantageously, the communications module is a 60 GHz communications module.
Advantageously, the communications module is a wireless communications module.
Advantageously, the device further comprises a receiver that receives one or more additional pre-approved transactions, and wherein the memory stores the one or more additional pre-approved transactions.
Advantageously, each pre-approved transaction comprises at least one of a merchant name, a merchant class, an approved amount, a point of sale location, and a class of goods.
Advantageously, the device further comprises:
a transmitter configured to transmit a notification message to a third-party device,
based on the determination.
According to an aspect, a method of delegating payment for a transaction comprises:
transmitting an approval request for a purchase of an item to a third-party device;
receiving an approval decision, based on the approval request; and
communicating a payment to a point of sale system, based on the approval decision.
Advantageously, the method further comprises receiving an approval decision from the third-party device, based on the approval request.
Advantageously, the third-party device is a first third-party device, and further comprising receiving an approval decision from a second third-party device, based on the approval request.
Advantageously, the method further comprises communicating a payment over near field communications to a point of sale system, based on the approval decision.
Advantageously, the approval request comprises at least one of a merchant ID, a merchant name, a merchant location, a sale price, a sale class, a Universal Product Code, a stock-keeping unit, an element of warranty information, or a return policy.
Advantageously, the approval decision comprises at least one of an approved transaction amount, a credit card number, credit card type, a credit card expiration date, an authorization code, a debit card number, or a bank account number.
According to an aspect, a method of communicating payment for a transaction comprises:
receiving transaction details for a transaction from a point of sale system;
determining whether the transaction details satisfy one or more pre-approved transaction criteria; and
communicating a payment to a point of sale system, based on the determination.
Advantageously, the method further comprises communicating a payment over near field communications to a point of sale system, based on the determination.
Advantageously, the pre-approved transaction criteria comprises at least one of a merchant name, a merchant class, an approved amount, a point of sale location, and a class of goods.
According to an aspect, a method of communicating payment for a transaction comprises:
transmitting a payment request for the transaction;
receiving one or more transaction details for the transaction;
transmitting an approval request to a third party device, wherein the approval request comprises the transaction details;
receiving an approval decision;
communicating a payment for the transaction to a point of sale system, based on the approval decision.
Advantageously, the method further comprises transmitting a payment request for the transaction over near field communication.
Advantageously, the method further comprises receiving one or more transaction details for the transaction over near field communication.
Advantageously, the method further comprises communicating a payment for the transaction over near field communication to a point of sale system, based on the approval decision.
Advantageously, the approval request comprises at least one of a merchant ID, a merchant name, a merchant location, a sale price, a sale class, a Universal Product Code, a stock-keeping unit, an element of warranty information, or a return policy.
Advantageously, the approval decision comprises at least one of an approved transaction amount, a credit card number, credit card type, a credit card expiration date, an authorization code, a debit card number, or a bank account number.
Advantageously, the method further comprises receiving an approval decision from the third party device.
Advantageously, the third party device is a first third party device, and further comprising receiving an approval decision from a second third party device.

Further embodiments, features, and advantages of the invention, as well as the structure and operation of the various embodiments of the invention are described in detail below with reference to accompanying drawings.

### BRIEF DESCRIPTION OF THE DRAWINGS/FIGURES

Embodiments of the invention are described with reference to the accompanying drawings. In the drawings, like reference numbers may indicate identical or functionally similar elements. The drawing in which an element first appears is generally indicated by the left-most digit in the corresponding reference number.

FIG. 1 is a block diagram of a NFC environment.

FIG. 2 is a block diagram of a first NFC device.

FIG. 3 is a diagram of an exemplary mobile device.

FIG. 4 is a diagram of an exemplary point of sale system.

FIG. 5 is a diagram of an exemplary method of delegating payment for a transaction.

FIG. 6 is a diagram of a further exemplary method of delegating payment for a transaction.

FIG. 7 is a diagram of a further exemplary method of delegating payment for a transaction.

FIG. 8 is a diagram of a further exemplary method of delegating payment for a transaction.

FIG. 9 is a diagram of a further exemplary method of delegating payment for a transaction.

### DETAILED DESCRIPTION

While the present invention is described herein with reference to the illustrative embodiments for particular applications, it should be understood that the invention is not limited thereto. Those skilled in the art with access to the teachings provided herein will recognize additional modifications, applications, and embodiments within the scope thereof and additional fields in which the invention would be of significant utility.

In the detailed description of embodiments that follows, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Merchants employing point of sale systems, and manufacturers of such point of sale systems, may extend the functionality of these systems to include communications modules, including wired and wireless communications modules such as near field communications modules, for example. Near field communication modules may allow a greater variety of payment methods that may be used for transactions. For example, instead of standard credit cards with magnetic strips, a credit card with a near field communications tag may be used to pay for a transaction in a contactless manner. That is, a purchaser having a credit card with an NFC tag may pass his credit card over a point of sale system having an NFC reader to transmit payment information without having to hand his credit card to the merchant.

Near field communications technology may be implemented in many common devices. For example, NFC modules capable of transmitting data may be implemented in computing systems, kiosks, door sensors, point of sale systems, and other devices. NFC modules may also be implemented in small computing devices such as mobile telephones, tablet computers, or other portable devices. Such a computing device may store payment details for a credit card or other method of payment, and an NFC module may transmit payment details associated with a credit card when the computing device is passed over a point of sale system.

Storing payment details on a computing device that is then used for payment may allow the actual payment to be delegated to a third party. The user of the computing device may not have the ability to pay for a transaction. Instead, the third party may have the ability to allow the user of the computing device to use the third party's payment details. Embodiments relate to methods and systems of delegating payment for transactions.

### Exemplary NFC Environment

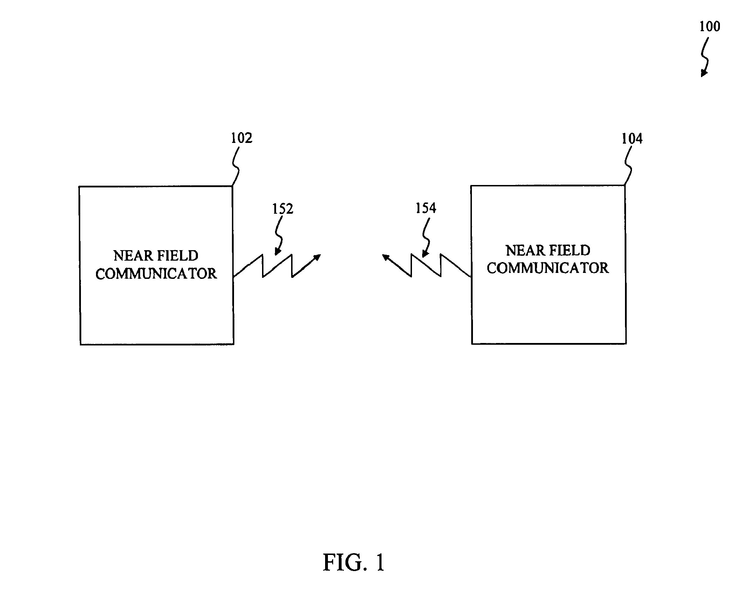

FIG. 1 illustrates a block diagram of a NFC environment according to an exemplary embodiment of the invention. A NFC environment 100 provides wireless communication of information among a first device 102 and a second device 104 that are sufficiently proximate to each other. The information may include one or more commands to be executed by the first NFC device 102 and/or the second NFC device 104, data from one or more data storage devices that is to be transferred to the first NFC device 102 and/or the second NFC device 104, or any combination thereof. The data storage devices may include one or more contactless transponders, one or more contactless tags, one or more contactless smartcards, or any other machine-readable mediums that will be apparent to those skilled in the relevant art(s) without departing from the spirit and scope of the invention, or any combination thereof. The other machine-readable medium may include, but is not limited to, read only memory (ROM), random access memory (RAM), magnetic disk storage media, optical storage media, flash memory devices, electrical, optical, acoustical or other forms of propagated signals such as carrier waves, infrared signals, or digital signals, to provide some examples.

The first NFC device 102 and/or the second NFC device 104 may be implemented as a standalone or a discrete device or may be incorporated within or coupled to larger electrical devices or host devices such as mobile telephones, portable computing devices, other computing devices such as personal, laptop, or desktop computers, computer peripherals such as printers, portable audio and/or video players, a payment system, a point of sale system, ticketing writing systems such as parking ticketing systems, bus ticketing systems, train ticketing systems or entrance ticketing systems to provide some examples, or in ticket reading systems, toys, games, posters, packaging, advertising materials, product inventory checking systems and/or any other suitable electronic device that will be apparent to those skilled in the relevant art(s) without departing from the spirit and scope of the invention.

Conventionally, an operator may operate and/or control the first NFC device 102 and/or the second NFC device 104 using a user interface, such as, for example a touch screen. The user interface may be configured to allow the operator to provide information, such as data and/or one or more commands to be executed to provide some examples, to the first NFC device 102 and/or the second NFC device 104. The user interface may be configured to provide information, such as data to provide an example, to the operator from the first NFC device 102 and/or the second NFC device 104 by providing images relating to the information to the operator. The user interface may include a touch-screen display, an alphanumeric keypad, a microphone, a mouse, a speaker, any other suitable user interface that will be apparent to those skilled in the relevant art(s) without departing from the spirit and scope of the invention, or any combination thereof.

The first NFC device 102 and/or the second NFC device 104 interact with each other to exchange information such as data and/or one or more commands to be executed by the first NFC device 102 and/or the second NFC device 104 to provide some examples. Typically, the first NFC device 102 and the second NFC communication 104 may operate according to an active communication mode and/or a passive communication mode. In the active communication mode, the first NFC device 102 modulates its corresponding information to be communicated to the second NFC device 104 onto its corresponding carrier wave and generates a first magnetic field by applying this modulated carrier wave to the first antenna to provide a first modulated data communication 152. The first NFC device 102 ceases to generate the first magnetic field after providing the first modulated data communication 152 in the active communication mode. The first NFC device 102 is sufficiently proximate to the second NFC device 104 such that the first magnetic field is inductively coupled onto a second antenna of the second NFC device 104. The second NFC device 104 demodulates the first modulated data communication 152 to recover the information embedded within the first modulated data communication 152. The second NFC device 104 may respond to this information by modulating its corresponding information to be communicated to the first NFC device 102 onto its corresponding carrier wave and generating a second magnetic field by applying this modulated carrier wave to the second antenna to provide a second modulated data communication 154 in the active communication mode.

In the passive communication mode, the first NFC device 102 modulates its corresponding information to be communicated to the second NFC device 104 onto its corresponding carrier wave and generates the first magnetic field by applying this modulated carrier wave to the first antenna to provide the first modulated data communication 152. The first NFC device 102 in passive communication mode continues to generate the first magnetic field after providing the first modulated data communication 152. The first NFC device 102 is sufficiently proximate to the second NFC device 104 such that the first magnetic field is inductively coupled onto the second antenna of the second NFC device 104. The second NFC device 104 demodulates the first modulated data communication 152 to recover the information embedded within the first modulated data communication 152. The second NFC device 104 may respond to this information by modulating the first magnetic field with its corresponding information to be communicated to the first NFC device 102 to provide a second modulated data communication 154 in the passive communication mode.

The first NFC device 102 and/or the second NFC device 104 may derive power from their corresponding internal batteries to interact with each other as well as to perform other functionality that is specific to first NFC device 102 and/or the second NFC device 104. Typically, the power derived from their corresponding internal batteries is sufficient to operate the user interface allowing the operator to operate and/or control the first NFC device 102 and/or the second NFC device 104. However, operation of the first NFC device 102 and/or the second NFC device 104 in a manner as described above discharges their corresponding internal batteries. Under certain circumstances, the first NFC device 102 and/or the second NFC device 104 may have to derive or harvest power from the first modulated data communication 152 and/or the second modulated data communication 154 when their corresponding internal batteries becomes too depleted. However, the power source harvested from the first modulated data communication 152 and/or the second modulated data communication 154 may not be able to provide adequate power for their user interfaces. In this situation, the operator may operate and/or control the first NFC device 102 and/or the second NFC device 104 by touching, or being sufficiently proximate to, the antenna lobes of the first antenna of the first NFC device 102 and/or the antenna lobes of the second antenna of the second NFC device 104 as to be described below. However, this example is not limiting, those skilled in the relevant art(s) will recognize that the operator may operate and/or control the first NFC device 102 and/or the second NFC device 104 by touching, or being sufficiently proximate to, their corresponding antenna lobes of their corresponding antennas when their corresponding internal batteries are capable of providing adequate power for their user interfaces.

The first NFC device 102 and/or the second NFC device 104 are further described in International Standard ISO/IE 18092:2004(E), "Information Technology - Telecommunications and Information Exchange Between Systems - Near Field Communication - Interface and Protocol (NFCIP-1)," published on April 1, 2004 and International Standard ISO/IE 21481:2005(E), "Information Technology - Telecommunications and Information Exchange Between Systems - Near Field Communication - Interface and Protocol -2 (NFCIP-2)," published on January 15, 2005, each of which is incorporated by reference herein in its entirety.

Although the first NFC device 102 and/or the second NFC device 104 are described as operating in a peer (P2P) communication mode, namely exchanging information between devices, those skilled in the relevant art(s) will recognize that one of the first NFC device 102 and/or the second NFC device 104 may be configured to operate in a reader/writer (R/W) communication mode and/or a card emulation (CE) communication mode without departing from the spirit and scope of the invention. For example, the second NFC device 104 may represent a passive NFC tag that is configured to transfer information from a memory to the first NFC device 102 in the R/W communication mode. The passive NFC tag may also be configured to transfer information from the first NFC device 102 to the memory in the R/W communication mode. As another example, the second NFC device 104 may represent a passive NFC card that is configured to transfer information from a memory to the first NFC device 102 in the CE mode of operation. The passive NFC card may also be configured to transfer information from the first NFC device 102 to the memory in the CE mode of operation. The passive NFC tag operates in a substantially similar manner as the passive NFC card; however, the passive NFC card includes additional technology to store secure information.

### Exemplary NFC Device

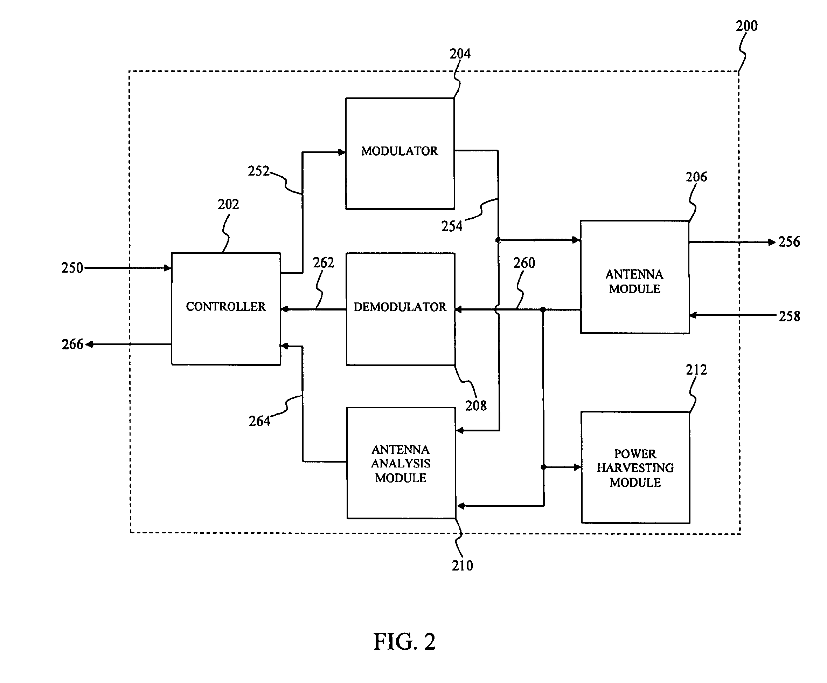

FIG. 2 illustrates a block diagram of a first NFC device that is implemented as part of the NFC environment according to an exemplary embodiment of the invention. NFC device 200 interacts with other NFC devices to exchange information, such as data and/or one or more commands to be executed to provide some examples. The NFC device 200 may operate in the active communication mode and/or the passive communication mode as described above. An operator may operate and/or control the NFC device 200 using the user interface as described above using power derived from its internal batteries. The NFC device 200 includes a controller module 202, a modulator module 204, an antenna module 206, a demodulator module 208, an antenna analysis module 210, and a power harvesting module 212. The NFC device 200 may represent an exemplary embodiment of the NFC device 102 and/or the NFC device 104.

The controller module 202 controls overall operation and/or configuration of the NFC device 200, as well as other NFC devices. The controller module 202 may be a special purpose or a general purpose processor, a state machine, an application specific integrated circuit, or any other suitable digital circuit that will be apparent to those skilled in the relevant art(s) without departing from the spirit and scope of the invention.

The controller module 202 receives information 250 from a data store such as a transponder, a tag, a smartcard, read only memory (ROM), random access memory (RAM), magnetic disk storage media, optical storage media, flash memory devices and/or any other suitable machine-readable medium that will be apparent to those skilled in the relevant art(s) without departing from the spirit and scope of the invention that is communicatively coupled to the controller module 202. The controller module 202 may also receive the information 250 from the user interface, and/or other electrical devices or host devices coupled to the NFC device 200.

The information 250 may include one or more commands to be executed by the controller module 202, data that is to be transferred to other NFC devices, or any combination thereof. The controller module 202 may issue and/or execute the one or more commands to control the overall operation and/or configuration of the NFC device 200. For example, the controller module 202 may issue and/or execute commands to control operations of the NFC device 200, as well as other NFC devices, such as a transmission power, a transmission data rate, a transmission frequency, a modulation scheme, a bit and/or a byte encoding scheme and/or any other suitable operation parameter that will be apparent to those skilled in the relevant art(s) without departing from the spirit and scope of the invention, of other NFC devices. Alternatively, the controller module 202 may format the information 250 into data frames for transmission to other NFC devices and, optionally, performs error encoding, such as cyclic redundancy check (CRC) to provide an example, on the data frames to provide transmission data 252. The data frames may include frame delimiters to include a start and/or an end of each of the data frames.

The controller module 202 operates in conjunction with other NFC devices to detect whether other substantial magnetic fields from any other NFC device are inductively coupled onto the antenna module 206 as described in International Standard ISO/IE 18092:2004(E), "Information Technology - Telecommunications and Information Exchange Between Systems - Near Field Communication - Interface and Protocol (NFCIP-1)," published on April 1, 2004 and International Standard ISO/IE 21481:2005(E), "Information Technology - Telecommunications and Information Exchange Between Systems - Near Field Communication - Interface and Protocol -2 (NFCIP-2)," published on January 15, 2005, each of which is incorporated by reference herein in its entirety.

The controller module 202 may perform other functionality as described in International Standard ISO/IE 18092:2004(E), "Information Technology - Telecommunications and Information Exchange Between Systems - Near Field Communication - Interface and Protocol (NFCIP-1)," published on April 1, 2004 and International Standard ISO/IE 21481:2005(E), "Information Technology - Telecommunications and Information Exchange Between Systems - Near Field Communication - Interface and Protocol -2 (NFCIP-2)," published on January 15, 2005, each of which is incorporated by reference herein in its entirety.

The modulator module 204 generates a radio frequency (RF) carrier and modulates the transmission data 252 onto the RF carrier using any suitable analog or digital modulation technique to provide modulated data 254 when no other substantial magnetic fields from other NFC devices are inductively coupled onto the antenna module 206. In an exemplary embodiment, the modulated data 254 may represent a differential communications signal comprising the modulated data 254.1 and the modulated data 254.2. The suitable analog or digital modulation technique may include amplitude modulation (AM), frequency modulation (FM), phase modulation (PM), phase shift keying (PSK), frequency shift keying (FSK), amplitude shift keying (ASK), quadrature amplitude modulation (QAM) and/or any other suitable modulation technique that will be apparent to those skilled in the relevant art(s).

After modulating the transmission data 252 onto the RF carrier, the modulator 204 continues to provide the RF carrier as the modulated data 254 after modulating the transmission data 252 onto the RF carrier in the passive communication mode when no other substantial magnetic fields from other NFC devices are inductively coupled onto the antenna module 206. However, when other substantial magnetic fields from other NFC devices are inductively coupled onto the antenna module 206, the modulator module 204 may provide the transmission data 252 as the modulated data 254. In this situation, the transmission data 252 may be used to modulate the other substantial magnetic fields from other NFC devices. In contrast, when operating in the active communication mode, the modulator module 204 ceases to provide the modulated data 254 after modulating the transmission data 252 onto the RF carrier in the active communication mode when no other substantial magnetic fields from other NFC devices are inductively coupled onto the antenna module 206.

The antenna module 206 applies the modulated data 254 to an inductive coupling element, such as a resonant tuned circuit to provide an example, to generate a magnetic field to provide a transmitted data communication 256 when no other substantial magnetic fields from other NFC devices are inductively coupled onto the inductive coupling element. However, when other substantial magnetic fields are inductively coupled onto the inductive coupling element, the antenna module 206 may modulate these other substantial magnetic fields according to the modulated data 254 to provide the transmitted data communication 256. Typically, the antenna module 206 load modulates these other substantial magnetic fields according to the modulated data 254 to provide the transmitted data communication 256.

Other NFC devices may inductively couple a received communications signal 258 onto the inductive coupling element of the antenna module 206 to provide a recovered communications signal 260. In an exemplary embodiment, the recovered communications signal 260 may represent a differential communications signal comprising the recovered communications signal 260.1 and recovered communications signal 260.2. For example, other NFC devices may apply their corresponding information to its corresponding magnetic field which is inductively coupled onto the antenna module 206 as the received communications signal 258 when other NFC devices are operating in the active mode of communication. Alternatively, other NFC devices may modulate their corresponding information onto the transmitted data communication 256 when they are operating in the passive mode of communication to provide the received communications signal 258.

### Exemplary Mobile Device

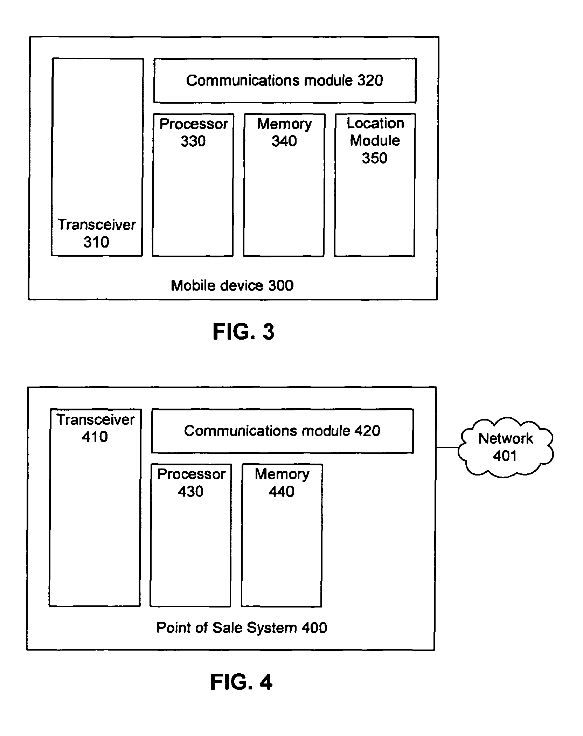

FIG. 3 is a diagram of a mobile device 300 in accordance with embodiments. Mobile device 300 may be a mobile telephone, tablet computer, or other device.

Mobile device 300 includes a transceiver module 310. Transceiver module 310 may be a cellular transceiver configured to communicate in compliance with the GSM or CDMA standards. Further, transceiver module 310 may operate in compliance with the 802.11 wireless standard. Further, transceiver module 310 may be any other type of wireless communications module that operates according to the functionality described herein. Still further, in alternate embodiments, transceiver module 310 may be a wired connection, such as a wired Ethernet or USB connection.

Mobile device 100 also includes communications module 320, such as near field communicator 102 as described above. Communications module 320 may provide the interface between a customer or user of mobile device 300 and a vendor or business. Communications module 320, when implemented as a near field communications module, may operate in a passive communications mode or an active communications mode. Communications module 320 may be a commonly available NFC controller. Communications module 320 may also be a Bluetooth communications module, a communications module operating in the 60 GHz band, or a ZigBee communications module, or any other type of wireless communications module that operates according to the functionality described herein.

Mobile device 300 also includes processor 330. Processor 330 may be a general purpose processor or special purpose processor. In embodiments, processor 330 may be configured to encrypt or decrypt information or data transmitted or received by transceiver 310 or communications module 320.

Mobile device 300 also includes memory 340. Memory 340 may be random access memory, flash storage, or other memory typically used in mobile devices.

Mobile device 300 also includes location module 350. Location module 350 may be operate in conjunction with Global Positioning System satellites to determine the location of mobile device 300. Further, location module 350 may use assisted GPS or other technologies to determine the location of mobile device 300.

### Exemplary Point of Sale System

FIG. 4 is a diagram of a point of sale system 400 in accordance with embodiments. Point of sale system 400 may be a laptop computer, desktop computer, cash register, payment terminal, kiosk, or other device including a portable device. Point of sale system 400 may also be a mobile device, such as a tablet computer or mobile telephone. Components of point of sale system 400 may be implemented in various devices as well.

Point of sale system 400 may include transceiver 410. In embodiments, transceiver 410 may be a wired Ethernet connection or wireless transceiver configured to communicate in compliance with various standards.

Point of sale system 400 includes communications module 420, such as near field communicator 104 as described above. Communications module 420 may provide the interface between a vendor or business having point of sale system 400 and a user or customer. Communications module 420, when implemented as a near field communications module 420, may be configured to communicate with another NFC-enabled device, such as a mobile device 300. Communications module 420 may also be a Bluetooth communications module, a communications module operating in the 60 GHz band, a ZigBee communications module, or other wireless communications module that operates according to the functionality described herein.

Point of sale system 400 may also include processor 430 and memory 440. Processor 430 may be a general or special purpose processor. In embodiments, processor 430 may be configured to encrypt or decrypt information or data transmitted or received by transceiver 410 or communications module 420. Memory 440 may include random access memory (RAM), hard disk drive storage, solid state drive storage, or other types of computer storage. If point of sale system 400 is implemented in a mobile device, for example, point of sale system 400 may also include a location module (not shown), for example GPS.

Delegation of payment for transactions may be useful in many situations. For example, a student may rely on her parents to pay for every day purchases such as food or clothing. Currently, the student's parents may provide the student with a credit card linked to their account in order to pay for such transactions, or the parents may transfer an amount of money to the student's bank account periodically. Similarly, a corporation may distribute corporate credit cards to its employees who travel for business. As a further example, a government agency may provide food stamps to needy citizens.

As the proliferation of mobile devices continues, these mobile devices may increasingly be used for payment for transactions. Embodiments described herein allow for mobile devices and point of sale systems to request payment approval from a third-party so that no physical distribution of credit cards, food stamps, or other payment methods is necessary. For example, instead of a student's parents providing the student with a credit card to purchase food, the student and her parents may use embodiments described herein to pay for a transaction. Similarly, a corporation may use embodiments described herein to pay for an employee's travel-related transactions, or a government agency may use embodiments to distribute assistance to the needy.

In operation, mobile device 300 and point of sale system 400 operate in conjunction to perform various transactions, and to allow delegation of payment or payment details for such transactions to third-party devices. Third-party devices may also be known as approving devices, as they approve payment for a given transaction. Third-party devices may include other mobile devices, laptop computers, desktop computers, servers, or other devices. A third-party device may provide payment details, such as a credit card number and expiration date, to a mobile device 300 or point of sale system 400 requesting such payment details

### Exemplary Environment

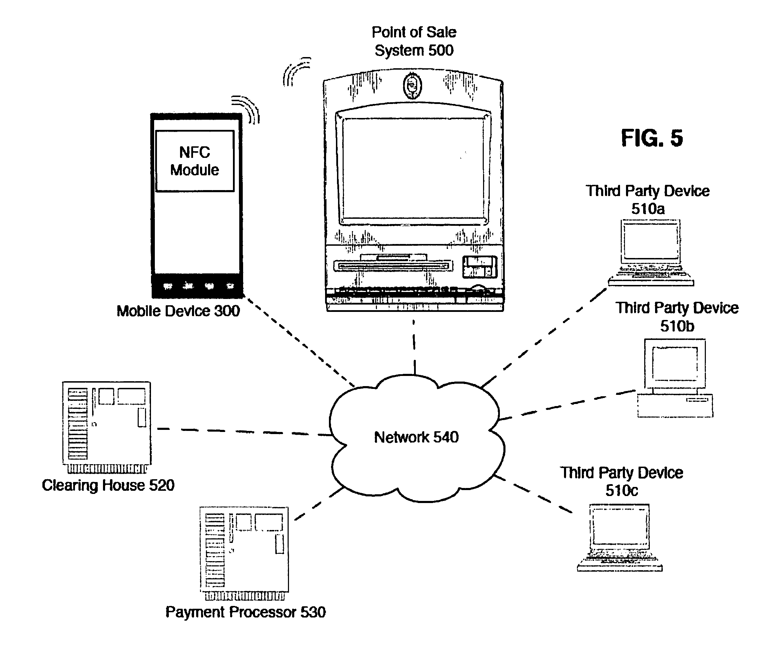

FIG. 5 is a diagram of an exemplary environment 500 in which embodiments may be implemented. Environment 500 includes mobile device 300 and point of sale system 400 as described herein. Environment 500 may also include third-party devices 510a - 510c. Environment 500 may also include clearing house 520 and payment processor 530. Clearing house 520 may be, for example and without limitation, a computer used at a bank. Payment processor 530 may be, for example and without limitation, a system used at a credit card processor. Devices contained in environment 500 may be connected by a network 540, which may be a local area network or wide area network such as the Internet.

### Exemplary Delegation Methods

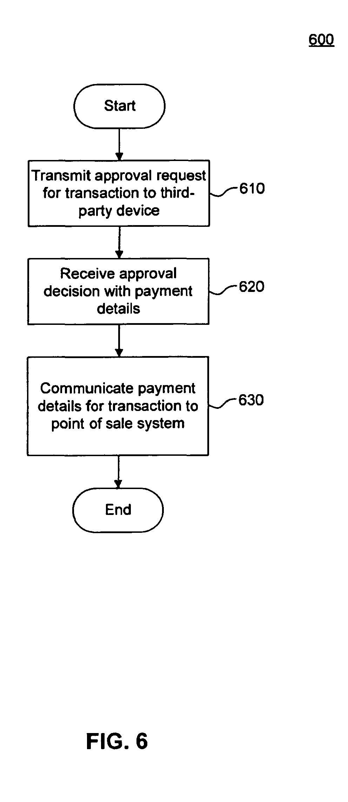

In an embodiment, a user, such as a student, may wish to make a transaction. The student may not have her own method of payment but rather may rely on her parents to pay for the transaction. In order to complete the transaction, the student's mobile device may delegate payment for the transaction to a third-party device, such as a parent's phone or computer. FIG. 6 is a diagram of a method 600 for delegating payment for a transaction.

At block 610, an approval request for a transaction is sent to a third-party device. Thus, for example, upon wishing to complete a transaction, a user of a device such as mobile device 300 may use an application or other functionality of the cellular phone to transmit, via transceiver 310, a message containing an approval request for purchase of an item or items to a third-party device. The message may contain data related to the transaction, such as the estimated cost, the items included in the purchase, or other data.

The third-party device, upon receipt of the approval request, may approve or deny the request. At block 620, an approval decision is received with payment details. In embodiments, transceiver 310 may receive the approval decision from the third-party device. Payment details included with the approval decision may include a credit card number, authorized amount, or other details. In embodiments, this information may be encrypted or protected with a code or password.

At block 630, the received payment details for the transaction are transmitted to a point of sale system. The received payment details may be transmitted using near field communications in an embodiment. Thus, for example, based on the approval decision, communications module 320 may communicate a payment to a point of sale system implementing components of point of sale system 400. Thus, communications module 420 of point of sale system 400 may receive the payment in order to complete the transaction. Completion of the transaction may include, for example and without limitation, communication of payment details from the point of sale system 400 to a credit card processor, and/or printing a receipt.

In embodiments, the approval decision received at block 620 may be received from a clearing house, such as a credit card processor. Thus, the third-party device may contact the clearing house, which may then transmit an approval decision to mobile device 300. Further, the approval decision received at block 620 may also be received via the point of sale system 400. That is, the third-party device or a clearing house may communicate with a point of sale system, for example, to confirm transaction details. The point of sale system may then transmit an approval decision to the mobile device.

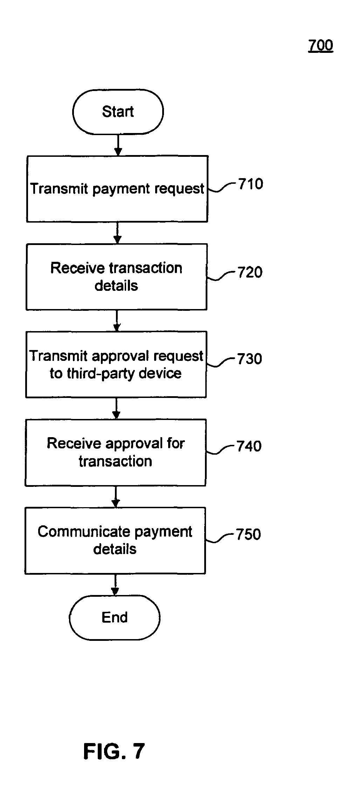

In an embodiment, transaction details may be provided by the point of sale system before an approval request is transmitted. This may be performed, for example, to ensure that the transaction to be approved accurately includes all items to be purchased. FIG. 7 is a diagram of an exemplary method 700 of delegating payment for a transaction. As above, a user having a cellular phone such as mobile device 300 may wish to purchase a number of items from a store.

Mobile device 300 may store delegation information that specifies, for example, that the parent's device will approve payment for transactions initiated by the child. The mobile device may store an e-mail address for the parent or a phone number for the parent.

At block 710, upon attempting to pay for the transaction, a payment request is transmitted. In embodiments, the payment request may be transmitted over NFC. For example, the child may pass her mobile device over or near a device such as point of sale system 400. Communications module 320 and communications module 420 may then initiate communication. As part of the communication, communications module 320 may send a payment request for the transaction to point of sale system 400. In response, point of sale system 400 may identify the payment request as a delegation payment request.

At block 720, the mobile device 300 receives transaction details from the point of sale system. The transaction details may include the total cost of the transaction, the items in the transaction, or other information. Point of sale system 400 may communicate the transaction details to mobile device 300 over NFC. Once mobile device 300 obtains the transaction details, mobile device 300 may transmit this information via transceiver 310 to a third-party approving device using a communications network such as network 401, including for example a cellular network.

Thus, at block 730, mobile device 300 transmits an approval request to a third-party device. The approval request may include the transaction details provided by point of sale system 400 and may include additional information. The user of the third-party device may take an action and decide whether to approve or deny the transaction.

At block 740, the mobile device may receive approval for the transaction. For example, approval may be received via transceiver 310. Approval may be received directly from the third-party device. Alternatively, the third-party device may communicate with a clearing house, such as a bank or credit card processor, which may then communicate with transceiver 310 of mobile device 300 to transmit an approval. The clearing house or third-party device may also transmit approval to the point of sale system, which in turn transmits the approval to the mobile device.

Upon receiving an approval for the transaction, at block 750, mobile device 300 may communicate payment details to point of sale system 400 using communications module 320. Payment details may include a credit card number, a debit card number, an approval code, or other payment details as described herein. Once payment details are communicated to point of sale system 300, the transaction can be completed.

In use, a mobile device 300 may not receive approval for the transaction from the third-party device for various reasons. For example, the third-party device may be a laptop computer controlled by the mobile device user's parents. At the time that mobile device 300 transmits an approval request at block 730, the laptop computer may not be reachable. Thus, in embodiments, the user of mobile device 300 may select a secondary approver for the transaction, and transmit a second approval request at block 730. Additionally, in embodiments, if the third-party device is not available to approve a transaction, transceiver 310 may transmit an approval request directly to a clearing house to receive approval for the transaction.

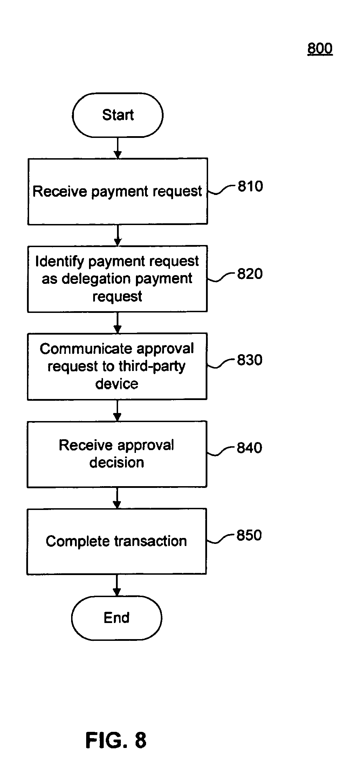

In a further embodiment, communication with third-party approving devices may be handled by a point of sale system. FIG. 8 is a diagram of an exemplary method 800 for delegation of payment for a transaction.

At block 810, a payment request is received. In embodiments, the payment request may be received over NFC. As above, the payment request may be as a result of a user passing her mobile device 300 over or near a device implementing components of point of sale system 400. As a result, communications module 320 and communications module 420 may initiate communication. As part of the communication, communications module 320 may send a payment request for the transaction to point of sale system 400.

At block 820, the point of sale system may identify the payment request as a delegation payment request. For example, the point of sale system may identify that the received payment request includes an identifier for a third-party device that is to approve the transaction.

Thus, at block 830, the point of sale system communicates an approval request to the third-party device identified at block 820. The point of sale system may communicate this approval request using, for example, communications module 420, and use the phone number, e-mail address, or other identifier to communicate the approval request. The approval request may also be communicated directly to a clearing house. The approval request may include various details related to the transaction.

Upon receipt of the approval request, the user of the third-party device may decide whether to approve or deny the transaction. At block 840, an approval decision is received by the point of sale system. For example, communications module 420 may receive the approval decision. The approval decision may be received from the third-party approving device, or from a clearing house such as a credit card processor.

At block 850 then, the transaction is completed. Completion of the transaction may include printing a receipt or other actions typical for such a transaction.

In embodiments, at block 840, the approval decision may not be received directly from the third-party approving device or the clearing house. For example, if the third-party approving device is unavailable for some reason, an approval decision may be received by a mobile device 300 at a later time. Once the approval decision is received, the user of the mobile device 300 can return to the point of sale system 400, which may then receive the approval decision and complete the transaction in accordance with block 850.

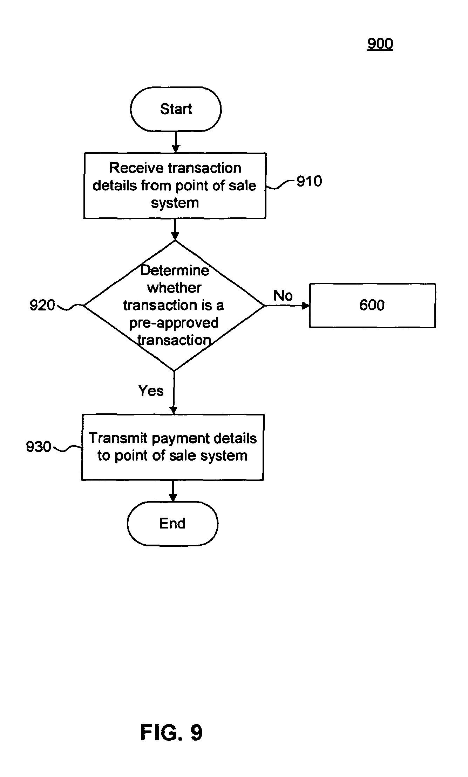

A mobile device in accordance with embodiments may store one or more pre-approved transactions and associated data in memory 340. Additionally, a mobile device in accordance with embodiments may retrieve one or more pre-approved transactions on a continuing, real-time basis from a third-party device. FIG. 9 is a diagram of an exemplary method 900 if a mobile device is implemented with pre-approved transactions.

At block 910, transaction details are received from a point of sale system. In embodiments, the transaction details may be received over NFC. As above, when the user is seeking to pay for a transaction, she may pass mobile device 300 near a point of sale system 400 with communications module 420. Point of sale system 400 may transmit details about the transaction to mobile device 300.

At decision block 920, aspects of the transaction are be analyzed to determine whether the transaction is a pre-approved transaction. For example, processor 330 of mobile device 300 may determine whether the transaction qualifies as a pre-approved transaction stored in memory 340. If the amount of the transaction or the merchant for the transaction satisfies criteria stored in memory 340, processor 330 may determine that the transaction is pre-approved. Pre-approval may also be based on the type of item sought for purchase [e.g. food, educational, medical] irrespective of the specific merchant or transaction amount up to a pre-determined threshold.

If, at decision block 920, the transaction is determined to not be a pre-approved transaction, method 900 may proceed to execute the steps of method 600, as described above, in order to obtain payment for the transaction. Alternatively, method 900 may end at this point. In a further embodiment, if the transaction is determined to not be a pre-approved transaction, mobile device 300 may communicate with a third-party approving device to update the pre-approved transactions stored in memory 340 such that the transaction becomes a pre-approved transaction. For example, if transactions under $50 are pre-approved transactions, and the user of mobile device 300 wishes to purchase items totaling $51, mobile device 300 may transmit a message to a third-party device to update the pre-approved transaction amount to $51.

If, at decision block 920, the transaction is determined to be a pre-approved transaction, method 900 proceeds to block 930. At block 930, in response to the determination, communications module 310 communicates payment for the transaction to point of sale system 400. The transaction may then be completed.

As described above, in an embodiment, a third-party device, such as a laptop computer or mobile device, may provide temporary purchasing authority to a mobile device 300. The user of such a third-party device may enter his or her credit card information using the third-party device and specify other details of approved transactions. As described herein, the user of the third-party device may provide other payment details as well. The third-party device may encode this information along with other details, and transmit such information to an appropriate mobile device 300. Once mobile device 300 receives such information, it may be used in accordance with method 900 of FIG. 9 to complete a transaction.

### Additional Delegation-Related Details

### Mobile Device

Each mobile device that requests approval for transactions may store various information, in accordance with embodiments. For example, each mobile device may store one or more identifiers for devices to request approval from. Such identifiers may comprise a phone number, an electronic mail address, Uniform Resource Locator (URL), IP address, or other unique identifier. The mobile device may also specify a preferred approver or an order in which to request approval from the approving devices.

In accordance with embodiments, a mobile device may store various data related to pre-approved transactions. In one embodiment, pre-approved transactions may specify a class of goods and an amount. For example, a given mobile device may be approved to spend up to $200 on clothing or groceries. In a further embodiment, pre-approved transactions may specify a merchant and an amount. For example, a given mobile device may be approved to spend up to $10 at a coffee shop. In a still further embodiment, pre-approved transactions may specify a POS location and an amount. For example, a given mobile device may be approved to spend up to $200 at ten POS locations specified by latitude and longitude or other coordinates. In accordance with embodiments, pre-approved transactions may be received from a third-party device, and periodically updated and enhanced. Pre-approved transactions may be revoked by third-party devices ad deleted from the mobile device. Further, pre-approved transactions may be stored on the third-party device and retrieved when appropriate.

A mobile device may also store payment method details. For example, the mobile device may store a credit card number or debit card number of a third-party approving device. In order to use the credit card number for payment, the third-party device may transmit an approval code to the mobile device upon approving a payment request, in accordance with the above methods.

Each mobile device that transmits a payment request or an authorization request may include one or more elements of metadata or data in the appropriate request. Metadata may include, for example and without limitation, the name of the user of the mobile device. Metadata may also include the phone number of the mobile device, or IMEI or other unique identifier.

The metadata transmitted may also include a security code specific to the user or the approver. For example, when an approver, such as a parent or company, initially sets up the delegation process, a security code, such as a four digit code or PIN, may be specified such that the mobile device can only be used by intended users.

The metadata transmitted may also include the location of the mobile device. The location may be specified by Global Positioning Systems (GPS), cellular towers, or assisted GPS. In embodiments, location information may be used by the approving party to ensure that the mobile device is not being used by an unauthorized party or in an unauthorized manner, or for other reasons. For example, if the transmitted metadata for a given transaction specifies that the mobile device is located in an unfamiliar area, the approving party may wish to contact the mobile device user.

The data transmitted may also include picture data. For example, the approving device may require that the user of the mobile device send a picture of the user for each transaction, to ensure that the intended party is requesting approval for the transaction. Further, instead of or in addition to other information about a transaction to be approved, a user may be required to take a picture of the items she wishes to purchase in order for the approval decision to be granted. Transmitted metadata may also include a Universal Product Code (UPC) for an item to be purchased. Such metadata, when received by a third-party device, may cause the third-party device to display details about the specific item, such as a picture or typical price.

Each approval request transmitted from a mobile device 300 or that is caused to be transmitted by a mobile device 300 may include a text message, voice call, e-mail message, or other communication to the third-party device to alert the user of the third-party device that approval is needed for a transaction. This may allow for the third-party device to approve the transaction in a timely manner.

### Point of Sale System

Each point of sale system may also store and transmit metadata. Such metadata may include identification for the merchant, or the name of the merchant. The location of the merchant may also be transmitted. Further, such metadata may include the sale price of the transaction, or a class of the transaction. Metadata transmitted from the point of sale system may also include a Universal Product Code (UPC) or stock-keeping unit (SKU) for a product or products in the transaction. For certain transactions, warranty information related to one or more of the products involved in the transaction may be transmitted to the approving device. Further, return policy information for the merchant may be transmitted to the approving device.

### Third-Party Device

A third-party approving device may store one or more payment methods, in accordance with embodiments. For example, the approving device may store one or more credit card numbers and associated data. Payment methods may also include debit card numbers, gift card numbers, gift certificate numbers, checking account information, savings account information, or Internet-based payment method information. Further, in embodiments, a unique authorization code based on any of the above payment methods may be generated for each transaction the third-party device approves. The unique authorization code may be transmitted to a mobile device, a point of sale system, a payment processor, or a bank. The unique authorization code may be encrypted in embodiments.

A third-party approving device may also store various data related to pre-approved transactions. For example, for each mobile device for which the third-party approving device approves transactions for, the approving device may store a phone number or other identifier. Further, the approving device may specify a list of approved merchants and approval amounts, class restrictions, or other data. For a particular phone or phones, the approving device may require a security code. The third-party approving device may also revoke pre-approved transactions for certain mobile devices, or enhance and update pre-approved transactions for a mobile device. Enhancing a pre-approved transaction may refer to increasing the amount that is pre-approved for a transaction, or allowing additional types of items to be purchased with a pre-approved transaction.

A third-party approving device may also have a security feature that only allows approval to be transmitted if the approving device is in specified location. For example, if a company laptop is stolen, such a security feature may prevent an unauthorized party from approving transactions.

Each third-party device may approve transactions for multiple mobile devices 300. For example, a third-party device, such as a desktop computer, may be controlled by an accounting department of a corporation, which may allow for employees of the corporation to make purchases on business trips. Thus, the desktop computer may receive payment delegation requests or send payment authorizations for each employee's mobile device 300.

Further, each third-party approving device may in and of itself be a mobile device 300. That is, a third-party device may possess the authority to approve transactions for a mobile device 300, and also require approval for certain transactions. This may be the case, for example, if the third-party device is a cellular phone issued by a company to its worker. The worker may use the cellular phone to approve transactions for his children, and also require approval for transactions executed on business trips.

The third-party device may also send its own message to a mobile device 300 to enable or revoke delegation. The third-party device may further send a time limit, list of locations, or other information for pre-approvals.

Each third-party device which approves transactions may also communicate various elements of metadata to either the mobile device requesting approval or a point of sale system. For example, the approving device may transmit a security code, which may be the same as a security code on the mobile device or may be independent. Further, the approving device's GPS location or other location may be transmitted to a point of sale system.

In embodiments, a fee may be charged for transaction delegation. For example, any of the parties involved in a particular transaction may add a small convenience or other fee that must be paid along with the amount of the transaction. As an example, a network carrier may impose a fee for all delegation or approval requests transmitted over its network. Similarly, a point of sale system may add a percentage fee based on the transaction amount if the payment is to be made by delegation.

In embodiments, data exchanged between third-party devices, point of sale systems, and mobile devices may be encrypted. Encryption may be dependent on the data being exchanged and the devices that are exchanging data. For example, communication between a third-party device and a point of sale system may be encrypted using an AES cipher if a credit card number is being transmitted. Other known methods of encryption may be used as well. Communication between a third-party device and a mobile device may not be encrypted, if the data being transmitted only includes pre-approved transactions, and does not include any payment details. Communication between a mobile device and a point of sale system may always be encrypted, in embodiments, to prevent man-in-the-middle attacks and the potential for payment information or payment authorization information to be compromised.

Various methods may be used to enable or revoke delegation. For example, to enable delegation, a user of a third-party device may manually enter payment data. As a further example, payment data may be downloaded from a bank website or credit card issuer website. Certain credit cards may be enabled with NFC technology. If the third-party approving device is equipped with NFC technology, the data may be transferred using NFC.

Further, to enable delegation, a mobile device 300 may transmit a request to a third-party approving device to be added to or removed from its list of devices that it approves transactions for. The mobile device may also send a request to add or remove a pre-approved transaction.

One of ordinary skill in the art would appreciate that communications between mobile devices and point of sale systems may be accomplished using near field communications, Bluetooth, 60 GHz transmission, ZigBee, or any other type of short range wireless communication.

Embodiments described herein may be directed to computer products comprising software stored on any computer usable medium. Such software, when executed in one or more data processing device, causes a data processing device(s) to operate as described herein.

Embodiments may be implemented in hardware, software, firmware, or a combination thereof. Embodiments may be implemented via a set of programs running in parallel on multiple machines.

The summary and abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments.

## Claims

1. A mobile device, comprising:
a communications module;
a processor; and
a transceiver, wherein the transceiver is configured to:
transmit an approval request for a purchase of an item to a third-party device;
receive an approval decision from the third-party device, based on the approval request;
wherein the communications module is configured to communicate a payment to a point of sale system, based on the approval decision.

2. The device of claim 1, wherein the communications module is a near field communications module.

3. The device of claim 1, wherein the communications module is a Bluetooth communications module.

4. The device of claim 1, wherein the communications module is a 60 GHz communications module.

5. The device of claim 1, wherein the communications module is a wireless communications module.

6. The device of claim 1, further comprising:
a memory, wherein the memory stores an identifier for one or more third-party devices.

7. The device of claim 1, wherein the approval request comprises at least one of a name, a phone number, a security code, a location, a picture of a user of the mobile device, or a picture of the item.

8. The device of claim 1, wherein the approval decision comprises at least one of an approved transaction amount, a credit card number, credit card type, a credit card expiration date, an authorization code, a debit card number, or a bank account number.

9. A mobile device, comprising:
a memory, the memory storing one or more pre-approved transactions;
a communications module configured to communicate an attempted payment for a transaction to a point of sale system;
a processor configured to determine whether the transaction is a pre-approved transaction;
wherein the communications module is further configured to communicate a payment for the transaction to the point of sale system, based on the determination.

10. A method of delegating payment for a transaction, comprising:
transmitting an approval request for a purchase of an item to a third-party device;
receiving an approval decision, based on the approval request; and
communicating a payment to a point of sale system, based on the approval decision.

11. The method of claim 10, further comprising receiving an approval decision from the third-party device, based on the approval request.

12. The method of claim 10, wherein the third-party device is a first third-party device, and further comprising receiving an approval decision from a second third-party device, based on the approval request.

13. The method of claim 10, further comprising communicating a payment over near field communications to a point of sale system, based on the approval decision.

14. A method of communicating payment for a transaction, comprising:
receiving transaction details for a transaction from a point of sale system;
determining whether the transaction details satisfy one or more pre-approved transaction criteria; and
communicating a payment to a point of sale system, based on the determination.

15. A method of communicating payment for a transaction, comprising:
transmitting a payment request for the transaction;
receiving one or more transaction details for the transaction;
transmitting an approval request to a third party device, wherein the approval request comprises the transaction details;
receiving an approval decision;
communicating a payment for the transaction to a point of sale system, based on the approval decision.
